# EUROPÄISCHE PATENTSCHRIFT

(11) **EP 3 659 244 B1**
(45) Veröffentlichungstag und Bekanntmachung des Hinweises auf die Patenterteilung: **20.10.2021**
(21) Anmeldenummer: 18759244.9
(22) Anmeldetag: 27.07.2018
(51) Int. Cl.: H02K 15/04

(54) **VERFAHREN UND VORRICHTUNG ZUM WICKELN EINER WELLENWICKELMATTE SOWIE DAMIT HERSTELLBARE WELLENWICKELMATTE**
METHOD AND DEVICE FOR WINDING A WAVE WINDING MAT AND WAVE WINDING MAT THAT CAN BE PRODUCED BY MEANS OF SAME
PROCÉDÉ ET DISPOSITIF D'ENROULEMENT D'UNE NATTE D'ENROULEMENT ONDULÉ AINSI QUE NATTE D'ENROULEMENT ONDULÉ AINSI FABRIQUÉE

(30) Priorität: 28.07.2017 DE 102017117191; 06.09.2017 DE 102017120559
(43) Veröffentlichungstag der Anmeldung: 03.06.2020
(73) Patentinhaber: Grob-Werke GmbH & Co. KG, 87719 Mindelheim (DE)
(72) Erfinder: HAGGENMÜLLER, Tobias, 87647 Unterthingau (DE); DREIER, Günter, 86489 Deisenhausen (DE)
(74) Vertreter: KASTEL Patentanwälte PartG mbB
(86) Internationale Anmeldenummer: PCT/DE2018/100670
(87) Internationale Veröffentlichungsnummer: WO 2019/020148

(56) Entgegenhaltungen:
- EP-A1- 3 182 568
- WO-A1-2018/091163
- DE-A1-102004 042 768
- US-A1- 2006 022 547

## Beschreibung

Die Erfindung betrifft ein Wellenwickelverfahren zum Wickeln einer Wellenwickelmatte zum Bilden einer Spulenwicklung einer elektrischen Maschine. Außerdem betrifft die Erfindung eine Wellenwickelvorrichtung zum Wickeln einer Wellenwickelmatte zum Bilden einer Spulenwicklung einer elektrischen Maschine.

Zum technologischen Hintergrund der Erfindung wird auf folgende Literaturstellen verwiesen:
[1] WO 2016/174542 A1
[2] DE 10 2015 120 661 A1
[3] DE 10 2015 120 963 A1
[4] EP 3 182 568 A1.

Zum weiteren Stand der Technik wird auf folgende Literaturstellen verwiesen:
[5] DE 10 2014 111 803 A1
[6] DE 103 28 956 A1
[7] DE 10 2008 019 479 A1
[8] JP 2003 324 911 A
[9] US 2006/0230603 A1
[10] DE 10 2004 042 768 A1
[11] US 2006/0022547 A1

Die vorliegende Erfindung liegt auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen. Es ist zum Aufbau von Statoren derartiger leistungsfähiger elektrischer Maschinen vorteilhaft, eine möglichst hohe Spulendichte bereitzustellen.

Hierzu ist aus den vorerwähnten Literaturstellen [1] bis [11] bekannt, Wellenwickelmatten bereitzustellen, die in radial offene Nuten eines Haltekörpers, wie insbesondere dem Hauptkörper eines Stators oder eines Rotors, eingefügt werden können. Um einen besonders hohen Füllgrad zu erreichen, werden die Spulenwicklungen insbesondere aus Drähten mit rechteckigem Querschnitt hergestellt, für die zum Wickeln von Drähten mit rundem Querschnitt konzipierte Wicklungsverfahren wenig geeignet sind. Daher werden gemäß Literaturstellen [1] bis [11] Wellenwickelmatten zum Bereitstellen der Spulenwicklungen vorgeschlagen, welche beispielsweise eine Vielzahl paralleler Drähte aufweist, die gerade Drahtabschnitte besitzen, welche in die Nuten eines Stators angeordnet werden. Diese geraden Abschnitte alternieren zwischen einer inneren Radiallage und einer äußeren Radiallage in dem Bauteil der elektrischen Maschine, wobei zwischen diesen geraden Drahtabschnitten an den Längsrändern der Wellenwickelmatte Umbiegungen vorgesehen sind, die als Wickelköpfe bezeichnet werden.

Zum Wickeln der Wellenwickelmatte schlagen die Literaturstellen [2] bis [4] das Aufwickeln eines Bündels paralleler Drähte auf einem sich um eine Drehachse drehbaren Wickelschwert vor. Vor dem Aufwickeln wird das Bündel paralleler Drähte abschnittsweise zu schrägen Drahtabschnitten gebogen, welche sich zwischen den geraden Drahtabschnitten erstrecken und nach dem Umbiegen auf dem Wickelschwert die Wickelköpfe bilden.

Die [1] beschreibt das Wickeln einer Wellenwickelmatte mit einer Wickeleinrichtung, die kein Wickelschwert aufweist. Allgemein erfolgt eine Umbiegung an einer an einem Umbiegeelement vorgesehenen Biegekante, welches um eine Drehachse drehbar ist.

Hierdurch entsteht eine Wellenwickelmatte, die sich mit geraden Drahtabschnitten in zwei Lagen und Wickelköpfen dazwischen über eine derartige Länge erstreckt, dass sie in mehreren Lagen in einen Stator eingesetzt werden kann. Die Nuten des Stators sind nur geringfügig größer als die hierin einzufügenden Drähte, so dass das Einfügen der Drähte schwierig zu handhaben ist.

Die Erfindung hat sich zur Aufgabe gestellt, eine Wellenwickelmatte sowie ein Verfahren und eine Vorrichtung zur Herstellung einer solchen zur Verfügung zu stellen, mittels denen der Herstellprozess einer elektrischen Maschine vereinfacht werden kann.

Zum Lösen dieser Aufgabe schafft die Erfindung ein Wellenwickelverfahren mit den Schritten des Anspruchs 1 sowie eine Wellenwickelvorrichtung mit den Merkmalen des Anspruchs 5.

Vorteilhafte Ausgestaltungen sind Gegenstand der Unteransprüche.

Die Erfindung schafft gemäß einem ersten Aspekt ein Wellenwickelverfahren zum Wickeln einer Wellenwickelmatte zum Bilden einer Spulenwicklung einer elektrischen Maschine, umfassend Wickeln eines oder mehrerer Drähte mit einem vordefinierten Drahtabstand zwischen Drahtabschnitten, wobei der Drahtabstand für unterschiedliche Bereiche der Wellenwickelmatte unterschiedlich eingestellt wird.

Das Bilden unterschiedlicher Drahtabstände kann auf unterschiedliche Weise erfolgen. Insbesondere dann, wenn mehrere Drähte parallel verarbeitet werden, ist es vorteilhaft, wenn die Drähte an Backen gehalten werden, die vorzugsweise zum Halten der Drähte in einem vorbestimmten Abstand ausgebildet sind.

Gemäß einer ersten Alternative ist vorgesehen, dass zum Bilden unterschiedlicher Drahtabstände ein Austausch wenigstens einer ersten Backe an einer Halteeinrichtung zum Halten im Wesentlichen parallel geführter Drähte erfolgt.

Gemäß einer zweiten Alternative ist vorgesehen, dass zum Bilden unterschiedlicher Drahtabstände ein Austausch wenigstens einer zweiten Backe an einer drehbaren Wickeleinrichtung erfolgt.

Besonders bevorzugt erfolgt zum Bilden unterschiedlicher Drahtabstände ein Austausch wenigstens einer ersten Backe an einer Halteeinrichtung zum Halten im Wesentlichen parallel geführter Drähte und wenigstens einer zweiten Backe an einer drehbaren Wickeleinrichtung.

Es ist bevorzugt, dass zum Bilden unterschiedlicher Drahtabstände ein Versatz zwischen zwei durch einen geneigten Drahtabschnitt verbundenen Drahtabschnitten geändert wird.

Es ist bevorzugt, dass Wickelköpfe, die vorzugsweise mit U-förmig umgebogenen Drahtabschnitten gebildet werden, in unterschiedlichen Bereichen der Wickelwellenmatte unterschiedlich geformt werden.

Gemäß einer anderen Ausgestaltung schafft die Erfindung ein Wellenwickelverfahren zum Wickeln einer Wellenwickelmatte zum Bilden einer Spulenwicklung einer elektrischen Maschine, gekennzeichnet durch Wickeln eines oder mehrerer Drähte mit einem vordefinierten Drahtabstand zwischen Drahtabschnitten, wobei Wickelköpfe in unterschiedlichen Bereichen der Wellenwickelmatte unterschiedlich geformt werden.

Es ist bevorzugt, dass das Wellenwickelverfahren den Schritt umfasst: Transportieren eines bereits gewickelten Bereichs der herzustellenden Wellenwickelmatte mittels mehrerer Backen durch Bewegen der Backen auf einer sich in Richtung einer Drehachse einer Wickeleinrichtung erstreckenden Backenführung.

Vorzugsweise umfasst das Wellenwickelverfahren den Schritt:
Rückführung von Backen von dem Ende der Backenführung zu deren Beginn.

Als ein bevorzugtes Ergebnis des Wellenwickelverfahrens wird eine Wellenwickelmatte zum Bilden einer Spulenwicklung einer elektrischen Maschine erhalten, wobei im Wesentlichen geradlinige Drahtabschnitte in einem vordefinierten Drahtabstand zueinander angeordnet sind, wobei die Wellenwickelmatte Bereiche hat, in denen der vordefinierte Drahtabstand unterschiedlich ist.

Eine solche Wellenwickelmatte ist durch ein Wellenwickelverfahren gemäß einer der voranstehenden Ausführungsformen und/oder mittels einer Wellenwickelvorrichtung gemäß einer der nachstehend erläuterten Ausführungsformen herstellbar.

Es ist bevorzugt, dass sich ein erster Bereich mit einem ersten Drahtabstand d1 von einem Ende der Wellenwickelmatte in Längserstreckungsrichtung der Wellenwickelmatte erstreckt, dass sich ein dritter Bereich mit einem dritten Drahtabstand d3 in Längserstreckungsrichtung der Wellenwickelmatte bis zu dem anderen Ende erstreckt, dass zwischen dem ersten Bereich und dem dritten Bereich ein zweiter Bereich mit einem zweiten Drahtabstand d2 vorgesehen ist und dass gilt: d1<d2<d3.

Es ist bevorzugt, dass Wickelköpfe, die vorzugsweise mit U-förmig umgebogenen Drahtabschnitten gebildet werden, in unterschiedlichen Bereichen der Wickelwellenmatte unterschiedlich geformt sind.

Gemäß einer Alternative ist eine Wellenwickelmatte zum Bilden einer Spulenwicklung einer elektrischen Maschine erhältlich, wobei im Wesentlichen geradlinige Drahtabschnitte in einem vordefinierten Drahtabstand zueinander angeordnet sind, wobei die Wellenwickelmatte Bereiche hat, bei denen die Form von Wickelköpfen unterschiedlich ist.

Vorzugsweise sind an einem ersten Bereich, der sich von einem Ende der Wickelwellenmatte in Längsrichtung der Wickelwellenmatte erstreckt, die Wickelköpfe mehr zu einer Seite in einer ersten Richtung quer zur Längsrichtung hin geformt, und an einem dritten Bereich, der sich von dem anderen Ende der Wickelwellenmatte in Längsrichtung erstreckt, die Wickelköpfe mehr zu der anderen Seite in der zur ersten Richtung entgegengesetzten zweiten Richtung quer zur Längsrichtung hin geformt.

Dadurch können sich z.B. an einer durch den ersten Bereich gebildeten äußeren Lage der im Betrieb als Spulenwicklung verwendeten Wellenwickelmatte die Wickelköpfe mehr radial nach außen erstrecken und an einer durch den dritten Bereich gebildeten inneren Lage können sich die Wickelköpfe mehr nach innen erstrecken. Hierdurch wird der Einbau der Wellenwickelmatte weiter erleichtert.

Sämtliche vorerwähnten Eigenschaften und Merkmale werden an einer Wellenwickelmatte mit dem Verfahren und der Vorrichtung gemäß einer Ausgestaltung der Erfindung vor deren Einbau in ein Bauteil der elektrischen Maschine, also im unverformten, unbelasteten Zustand, erreicht.

Gemäß einem weiteren Aspekt schafft die Erfindung eine Wellenwickelvorrichtung zum Wickeln einer Wellenwickelmatte zum Bilden einer Spulenwicklung einer elektrischen Maschine, umfassend:
wenigstens eine Halteeinrichtung zum Halten im Wesentlichen parallel geführter Drähte, an der eine erste Backe zum Kontakt mit den Drähten vorgesehen ist, eine um eine Drehachse drehbare und wenigstens eine Biegekante aufweisende Wickeleinrichtung, an der eine zweite Backe zum Kontakt mit den Drähten zwecks Halten der Drähte beim Biegen um die Biegekante vorgesehen ist, und eine Backenaustauschanordnung zum Austauschen der ersten und/oder der zweiten Backe. Die Wellenwickelvorrichtung ist derart ausgebildet, dass zum Bilden unterschiedlicher Drahtabstände ein Austausch wenigstens einer ersten Backe an der Halteeinrichtung und/oder ein Austausch wenigstens einer zweiten Backe an der drehbaren Wickeleinrichtung erfolgt.

Vorzugsweise ist die Wellenwickelvorrichtung zum Durchführen des Wellenwickelverfahrens gemäß einer der voranstehenden Ausgestaltungen vorgesehen.

Bei einer bevorzugten Ausgestaltung weist die Wickeleinrichtung ein sich um die Drehachse drehbares Biegeschwert oder Wickelschwert auf, an der die wenigstens eine Biegekante, vorzugsweise eine erste Biegekante und eine zweite Biegekante, vorgesehen ist.

Statt eines Biegeschwertes oder Wickelschwertes kann auch eine weitgehend beliebige Biegekante verwendet werden kann, um die Wellenwickelmatte unter Verwendung von Backen, z.B. zweier zweiter Backen, zusammen mit der Biegekante um die Biegekante umzubiegen. Z.B. kann sich die Biegekante dabei wie ein Wickelschwert drehen, ähnlich wie dies in der Literaturstelle [1] beschrieben ist. Die Biegekante kann dabei, wenn ein bestimmter Grad der Umbiegung erreicht ist, weggezogen werden, und die restliche Umbiegung dann durch Zusammendrücken erzielt werden.

Zum Umbiegen um die Biegekante ist es vorteilhaft, jeweils wenigstens zwei zweite Backen vorzusehen. Vorzugsweise ist eine der zweite Backen in Drahtvorschubrichtung stromaufwärts vor der Biegekante angeordnet, damit die Drähte nicht nach unten "weggehen", d.h. die von der Biegekante auf die Drähte ausgeübte Kraft abgestützt wird. Vorzugsweise presst die andere zweite Backe den Draht an die Biegekante.

Vorzugsweise erfolgt ein Biegen eines Versatzes zum Bilden schräger Drahtabschnitte mittels der ersten Backen der Halteeinrichtung, während das Umbiegen mittels der zweiten Backen einer Umbiegeeinrichtung erfolgt.

Die zweiten Backen werden vorzugsweise an der Umbiegeeinrichtung geführt.

Es ist bevorzugt, dass die Wickeleinrichtung eine Backenführung zum Führen mehrerer zweiter Backen auf einer sich mit wenigstens einer Richtungskomponente in Richtung der Drehachse verlaufenden Backenführungsbahn aufweist.

Es ist bevorzugt, dass die Backenaustauschanordnung eine Backenzuführeinrichtung zum Zuführen zweiter Backen in die Backenführung und/oder eine Backenrückführeinrichtung zum Rückführen zweiter Backen von einem Ende der Backenführung zu einem Beginn der Backenführung aufweist.

Es ist bevorzugt, dass weiter im Bereich der Backenführung eine Wickelkopfformeinrichtung zum Formen von Wickelköpfen der Wellenwicklungsmatte unter Halterung derselben an wenigstens einer zweiten Backe vorgesehen ist.

Vorzugsweise weist die Wickelkopfformeinrichtung mehrere mit unterschiedlichen Formen oder Stempeln versehene Bereiche zum unterschiedlichen Formen von Wickelköpfen an unterschiedlichen Bereichen der Wellenwickelmatte auf.

Die jeweilige Backenaustauscheinheit der Backenaustauschanordnung kann jeweils wenigstens ein Magazin zum Austauschen der Backen aufweisen. Zum Beispiel können Drehmagazine oder Linearmagazine zum Einsatz kommen.

Es ist bevorzugt, dass die Backenaustauschanordnung an der Haltevorrichtung ein Drehmagazin zum Austausch erster Backen aufweist. Alternativ ist ein Linearmagazin vorgesehen. Es kann auch eine Kombination aus Drehmagazin und Linearmagazin zum Einsatz kommen.

Es ist bevorzugt, dass die ersten und/oder zweiten Backen Drahtaufnahmen zur seitlichen Positionierung der im Wesentlichen parallel geführten Drähte aufweisen.

Es ist bevorzugt, dass unterschiedliche erste und/oder zweite Backen mit unterschiedlichen Abständen zwischen ihren Drahtaufnahmen vorgesehen sind und durch die Backenaustauschanordnung austauschbar sind.

Es ist bevorzugt, dass mehrere Halteeinrichtungen vorgesehen sind, von denen wenigstens eine relativ zu wenigstens einer anderen und/oder zu der Wickeleinrichtung in einer Richtung quer zu der Drehachse und/oder in einer Richtung parallel zu der Drehachse vorzugsweise angetrieben bewegbar ist.

Es ist bevorzugt, dass wenigstens eine feststehende Halteeinrichtung und wenigstens eine bewegliche Halteeinrichtung vorgesehen sind.

Es ist bevorzugt, dass ein Bewegungshub einer beweglichen Halteeinrichtung einstellbar ist.

Bevorzugte Ausgestaltungen der Erfindung befassen sich mit der Herstellung einer Wickelmatte für Statoren und Rotoren eines Elektromotors oder einer sonstigen elektrischen Maschine, wie z.B. eines Generators. Eine bevorzugte Ausgestaltung der Wickelmatte weist eine Vielzahl von miteinander verflochtenen Drähten auf oder besteht aus solchen Drähten.

Derartige Wickelmatten dienen zum Bilden von Spulenwicklungen an einem Bauteil der elektrischen Maschine wie insbesondere dem Stator bzw. Rotor. Hierzu wird bei einem möglichen Verfahren zum Herstellen eines solchen Bauteils die Wickelmatte nach dem Wickeln auf ein Fügewerkzeug gewickelt oder direkt in das Bauteil wie z.B. einen Stator eingefügt. Hierzu sind beispielsweise an dem Bauteil Nuten zur Aufnahme von Drahtabschnitten vorgesehen. Es werden meist mehrere zusammenhängende Lagen der Wickelmatte übereinander eingelegt. Dies hat zur Folge, dass der Durchmesser der inneren Lage der Wickelmatte kleiner ist als der Durchmesser der äußeren aufgerollten Lage der Wickelmatte. Dadurch wird bei einer bestimmten Anzahl an Nuten der Nutabstand nach innen kleiner. Beim Aufbringen auf das Fügewerkzeug oder in den Stator müssen bisher bekannte Wickelmatten somit verformt werden. Eine bevorzugte Ausgestaltung der Erfindung betrifft eine Wickelmatte mit verschiedenen Drahtabständen. Des Weiteren umfasst ein Aspekt der Erfindung die Herstellung einer derartigen Wickelmatte.

Eine bevorzugte Ausgestaltung der Erfindung betrifft ein Verfahren und eine Vorrichtung zum Herstellen einer Drahtmatte mit verschiedenen Drahtabständen. Eine solche hat unter anderem Vorteile beim Aufwickeln auf ein Fügewerkzeug oder beim direkten Einbringen in ein Bauteil einer elektrischen Maschine wie z.B. den Stator eines Elektromotors.

Eine bevorzugte Ausgestaltung der Erfindung betrifft ein Verfahren und eine Vorrichtung zum Wickeln von unterschiedlichen Drahtabständen. Vorzugsweise wird dies durch Verwendung von Wechselbacken und/oder Umlaufbacken ermöglicht.

Vorzugsweise wird eine Vorrichtung mit Umlaufbacken vorgeschlagen. Vorzugsweise werden Umlaufbacken zum Formen der Wickelmatte verwendet.

Eine bevorzugte Ausgestaltung der Wickelmatte dient dazu, mehrfach um den Umfang eines Stators herumgewickelt zu werden. Dadurch ergeben sich unterschiedliche Radien für die unterschiedlichen Lagen. Dies ergibt Probleme beim Einsetzen in die einzelnen Nuten. Daher ist eine bevorzugte Ausgestaltung der Matte in drei unterschiedliche Abschnitte aufgeteilt, die jeweils unterschiedliche Drahtabstände aufweisen. Die Matte selbst weist zwei Lagen auf mit jeweils Umbiegungen an der Seite, die sogenannten Wickelköpfe. Vorzugsweise sind die Abstände zwischen den Drähten nur sehr gering, sie liegen z.B. im Bereich von wenigen Millimetern. Die Unterschiede zwischen den Drahtabständen betragen z.B. zwischen 0,01 mm und 0,5 mm. Die Anzahl der Bereiche mit unterschiedlichen Drahtabständen richtet sich z.B. nach der Anzahl der damit herzustellenden Lagen. Soll die Wickelmatte nur in zwei Lagen am Bauteil verlegt werden, wären z.B. zwei Bereiche unterschiedlichen Drahtabstands geeignet. Sollen vier Lagen vorgesehen werden, wären vier Bereiche unterschiedlichen Drahtabstands vorteilhaft.

Gemäß einem weiteren Aspekt betrifft die Erfindung die Verwendung einerWellenwickelmatte, erhältlich durch eine Verfahren oder mit einer Vorrichtung gemäß einer der voranstehenden Ausgestaltungen bei der Herstellung eines Bauteils einer elektrischen Maschine, insbesondere eines Stators oder Rotors eines Elektromotors oder eines Generators, mehr insbesondere eines Fahrmotors eines Elektrokraftwagens.

Gemäß einem weiteren Aspekt betrifft die Erfindung ein Verfahren zum Herstellen eines Bauteils einer elektrischen Maschine, insbesondere eines Rotors oder Stators eines Elektromotors, mehr insbesondere eines Fahrelektromotor eines Elektro- oder Hybridfahrzeuges, umfassend Durchführen des Wellenwickelverfahrens nach einer der voranstehenden Ausgestaltungen und Einsetzen der Wellenwickelmatte in einen Haltekörper des Bauteils, um so Spulenwicklungen des Bauteils zu bilden.

Gemäß einem weiteren Aspekt betrifft die Erfindung eine Vorrichtung zum Herstellen eines Bauteils einer elektrischen Maschine, insbesondere eines Rotors oder Stators eines Elektromotors, mehr insbesondere eines Fahrelektromotors eines Elektro- oder Hybridfahrzeuges, umfassend eine Wellenwickelvorrichtung nach einer der voranstehenden Ausgestaltungen und eine Einfügeeinrichtung zum Einfügen der Wellenwickelmatte in einen Haltekörper des Bauteils. Vorzugsweise weist die Einfügeeinrichtung ein Einfügewerkzeug auf, auf welches die Wellenwickelmatte vor dem Einfügen aufsetzbar, z.B. aufwickelbar ist.

Weitere mögliche Ausgestaltungen der Verfahren, Vorrichtungen und Matten der Erfindung ergeben sich durch Kombination der hier beschriebenen Ausgestaltungen mit Merkmalen oder Ausgestaltungen aus den oben genannten Literaturstellen [1], [2], [3] und [4], auf die für weitere Einzelheiten ausdrücklich verwiesen wird.

Ausführungsbeispiele der Erfindung werden im Folgenden anhand der beigefügten Zeichnungen näher erläutert. Darin zeigt:
- Fig. 1: einen Schnitt durch einen Stator entlang einer eine Mittelachse des Stators einschließenden Schnittebene, mit einem Grundkörper oder Haltekörper und einer darin eingesetzten, aus einer Wellenwickelmatte gebildeten Spulenwicklung;
- Fig. 2: einen Schnitt eines Bereichs entlang des Umfangs des Stators von Fig. 1 mit einer quer zu der Mittelachse des Stators verlaufenden Schnittebene, wobei radial offene Nuten und darin eingesetzte Drahtabschnitte der Wellenwickelmatte gezeigt sind;
- Fig. 3: eine Draufsicht auf die Wellenwickelmatte vor dem Einsetzen in den Stator gemäß den Fig. 1 und 2;
- Fig. 4: das Detail IV von Fig. 3, welches ein Ende der Wellenwickelmatte zeigt;
- Fig. 5: eine schematische Übersichtsdarstellung einer Wellenwickelvorrichtung zum Herstellen der Wellenwickelmatte der Fig. 3 und 4;
- Fig. 6: eine Vorderansicht einer Halteeinrichtung der Wellenwickelvorrichtung von Fig. 5;
- Fig. 7: eine perspektivische Ansicht der Halteeinrichtung;
- Fig. 8: eine Draufsicht auf einen Bereich der Wellenwickelvorrichtung von Fig. 5, wobei eine erste, eine zweite und eine dritte Halteeinrichtung sowie ein Teil einer Wickeleinrichtung bei einem ersten Prozessschritt zum Herstellen der Wellenwickelvorrichtung gezeigt sind;
- Fig. 9: eine Ansicht wie in Fig. 8 bei einem zweiten Prozessschritt;
- Fig. 10: eine Ansicht wie in Fig. 8 bei einem dritten Prozessschritt;
- Fig. 11: eine Seitenansicht von unten in Fig. 10 gesehen;
- Fig. 12: eine Ansicht vergleichbar der Fig. 8 bei noch einem weiteren Prozessschritt;
- Fig. 13: eine Seitenansicht der Wellenwickelvorrichtung bei dem Prozessschritt von Fig. 12 von unten in Fig. 12 gesehen;
- Fig. 14: eine Ansicht vergleichbar der Fig. 8, welche den auf den Prozessschritt von Fig. 12 folgenden Prozessschritt darstellt und somit ein Ende eines Wickelzyklus darstellt, woraufhin wiederum ein Prozessschritt gemäß Fig. 8 folgt;
- Fig. 15: eine Seitenansicht von unten in Fig. 5 gesehen auf eine Wickelkopfformeinrichtung der Wellenwickelvorrichtung;
- Fig. 16: die Wickelkopfformeinrichtung von Fig. 15 von rechts in Fig. 15 gesehen; und
- Fig. 17: ein Detail des Stators von Fig. 1 zur Verdeutlichung der Formung der Wellenwickelköpfe mittels der Wickelkopfformeinrichtung gemäß den Fig. 15 und 16.

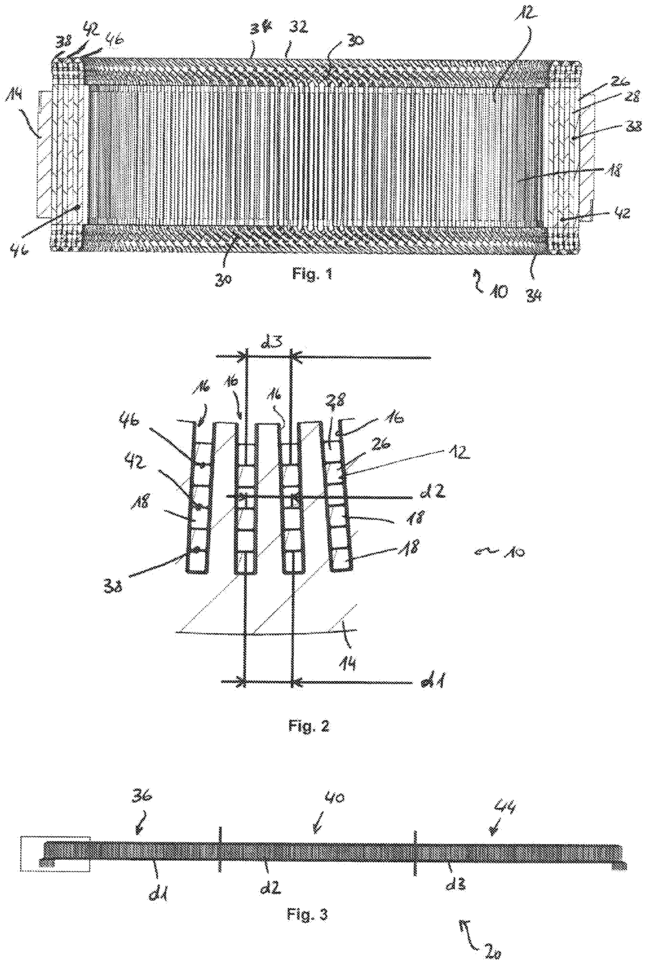

Die Fig. 1 und 2 zeigen einen Stator 10 eines als Fahrmotor von Elektrofahrzeugen verwendbaren Elektromotors als Beispiel für ein mit einer Spulenwicklung 12 versehenes Bauteil einer elektrischen Maschine.

Der Stator 10 weist einen Grundkörper als Haltekörper 14 und eine daran gehaltene Spulenwicklung 12 auf.

Der Haltekörper 14 ist ringförmig ausgebildet und weist eine Reihe von radial offenen Nuten 16 auf, in die mehrere Lagen geradliniger Drahtabschnitte 18 der Spulenwicklung 12 eingefügt sind. Bei dem dargestellten Ausführungsbeispiel sind die Nuten 16 nach innen hin offen.

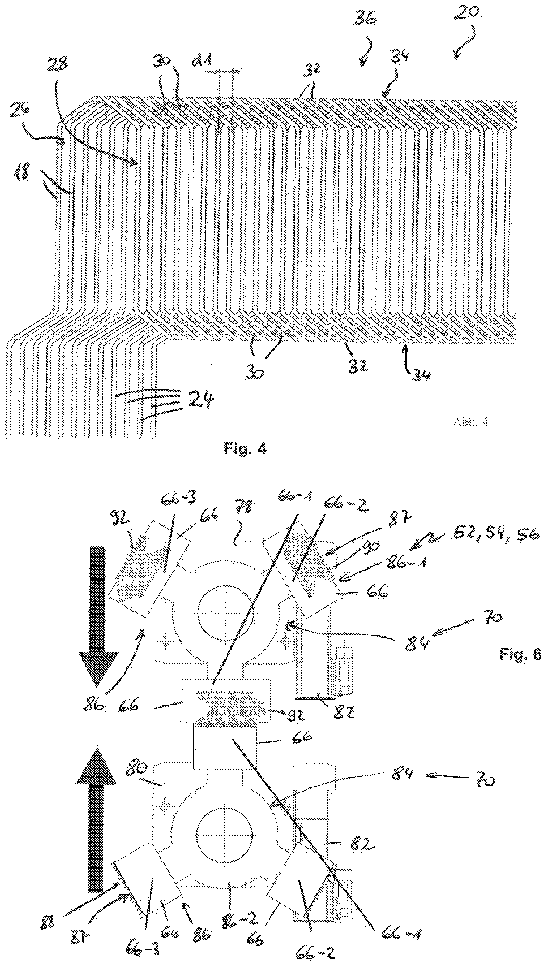

Die Spulenwicklung 12 ist durch Einfügen einer Wellenwickelmatte 20 gebildet, die näher in den Fig. 3 und 4 dargestellt ist.

Wie insbesondere aus Fig. 4 ersichtlich, ist die Wellenwickelmatte 20 aus einem Bündel 24 parallel geführter Drähte 24 gebildet, wobei die geradlinigen Drahtabschnitte 18 mit vorbestimmtem Drahtabstand d1, d2, d3 angeordnet sind. Die Drähte 24 verlaufen hierzu wechselseitig in einer ersten Drahtlage 26 und einer zweiten Drahtlage 28 der Wellenwickelmatte 20, wobei an den beiden Längsrändern der Wellenwickelmatte 20 durch schräge Drahtabschnitte 30, die eine Umbiegung 32 aufweisen, gebildete Wickelköpfe 34 vorgesehen sind.

Die in Fig. 3 dargestellte Wellenwickelmatte 20 weist einen ersten Bereich 36, der nach dem Einsetzen in den Haltekörper 14 eine äußere Lage der Spulenwicklung 12 bildet, einen zweiten Bereich 40, der nach dem Einsetzen in den Haltekörper 14 eine mittlere Lage 42 der Spulenwicklung 12 bildet, und einen dritten Bereich 44 auf, der nach dem Einsetzen in den Haltekörper 14 eine innere Lage 46 der Spulenwicklung 12 bildet.

Wie aus Fig. 2 ersichtlich, haben die Nuten 16 aufgrund ihrer radialen Ausrichtung außen einen größeren Abstand zueinander als innen. Somit sind die geradlinigen Drahtabschnitte 18 nach dem Einsetzen in die Nuten 16 in der äußeren Lage 38 weiter zueinander beabstandet als in der inneren Lage 46.

Um ein Einsetzen der Drähte 24 in die Nuten 16 zu erleichtern, ohne die Wellenwickelmatte 20 verformen zu müssen, ist der Drahtabstand zwischen den geradlinigen Drahtabschnitten 18 bei der in den Fig. 3 und 4 gezeigten Wellenwickelmatte 20 in den unterschiedlichen Bereichen 36, 40, 44 unterschiedlich gewählt.

Hier ist der Drahtabstand d1 in dem ersten Bereich 36, der bei dem hier dargestellten Ausführungsbeispiel die äußere Lage 38 bildet, größer als der Drahtabstand d2 in dem zweiten Bereich 40, der die mittlere Lage 42 bildet. Der Drahtabstand d2 des zweiten Bereichs 40 ist wiederum größer als der Drahtabstand d3 des dritten Bereiches 44, der die innere Lage 46 bildet. Die Drahtabstände d1, d2, d3 sind entsprechend der Drahtabstände der in die Nuten 16 eingesetzten Spulenwicklungen 12 ausgewählt, wie diese in Fig. 2 angegeben sind.

Somit zeigen die Fig. 3 und 4 eine Wellenwickelmatte 20 zum Bilden einer Spulenwicklung 12 einer elektrischen Maschine, wobei im Wesentlichen geradlinige Drahtabschnitte 18 in einem vordefinierten Drahtabstand d1, d2, d3 zueinander angeordnet sind, wobei die Wellenwickelmatte 20 Bereiche 36, 40, 44 hat, in denen der vordefinierte Drahtabstand d1, d2, d3 vor dem Einsetzen in ein Bauteil der elektrischen Maschine unterschiedlich ist.

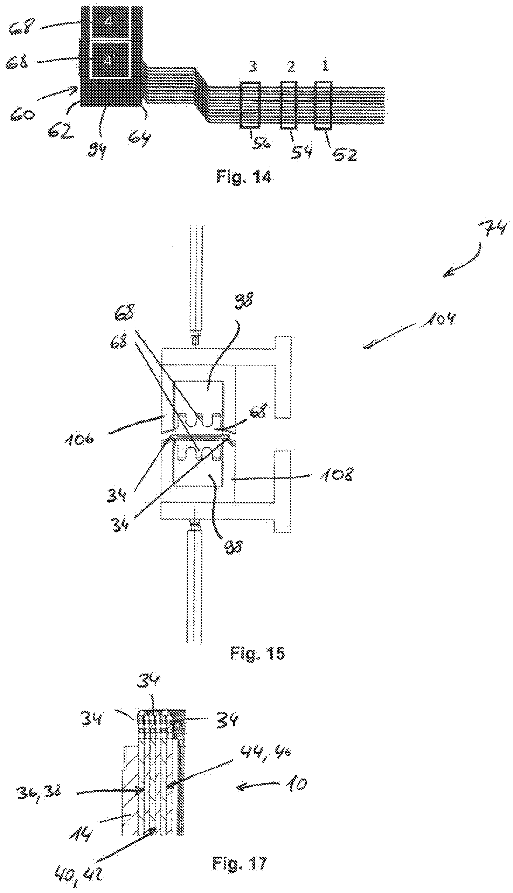

Wie weiter aus den Fig. 1 und 17 ersichtlich, sind außerdem die Wickelköpfe 34 in den unterschiedlichen Bereichen 36, 40, 44 unterschiedlich geformt. In dem ersten Bereich 36 sind die Wickelköpfe 34 mehr hin zu derjenigen Seite der Wellenwickelmatte 20 quer zu ihrer Längsrichtung geformt, die im Einsatz an den Stator 10 nach außen gerichtet ist. Die Wickelköpfe 34 in dem dritten Bereich 44 sind mehr nach der gegenüberliegenden Seite hin, die bei der bestimmungsgemäßen Verwendung als Spulenwicklung 12 nach innen hin geformt sind, gerichtet. Die Wickelköpfe 34 des zweiten Bereichs 40 haben zu beiden Seiten hin die gleiche Erstreckung. Auch hierdurch ist die Form der Wellenwickelmatte 20 besser an die spätere Form der Spulenwicklung 12 angepasst.

Hierdurch lässt sich die Wellenwickelmatte 20 leichter in die Nuten 16 einführen, so dass insgesamt die Herstellung des Stators 10 erleichtert ist.

Die beiden Maßnahmen des unterschiedlich definierten Drahtabstandes d1, d2, d3 und der unterschiedlich geformten Wickelköpfe 34 sind bei der bevorzugten Ausgestaltung zusammen vorgesehen. Bei anderen Ausgestaltungen ist nur eine dieser Maßnahmen vorgesehen.

Bei der dargestellten Ausführungsform des Stators 10 wird die Spulenwicklung 12 dadurch gebildet, dass die Wellenwickelmatte 20 in drei Lagen 38, 42, 46 gewickelt in die Nuten 16 eingesetzt wird. Dementsprechend sind bei der dargestellten Ausführungsform drei Bereiche 36, 40, 44 mit unterschiedlichen Drahtabständen d1, d2, d3 vorgesehen. Bei anderen Ausgestaltungen besteht die Spulenwicklung 12 aus zwei Lagen einer Wellenwickelmatte 20, wobei die Wellenwickelmatte 20 dann auch nur zwei Bereiche mit unterschiedlichem Drahtabstand aufweisen kann. Bei anderen Ausgestaltungen sind vier oder fünf Lagen vorgesehen, wobei dann entsprechend mehr Bereiche mit unterschiedlichem Drahtabstand vorgesehen sein können.

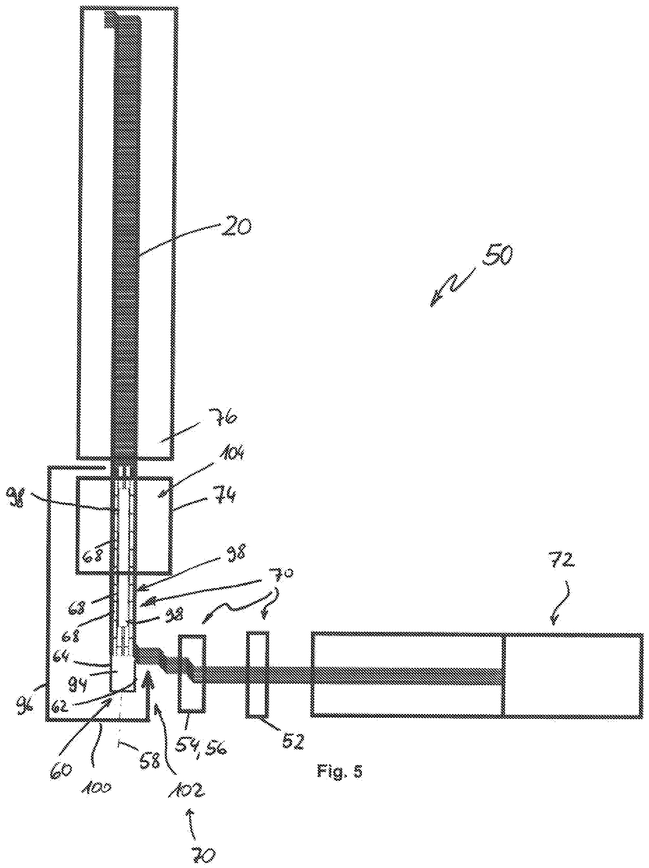

Im Folgenden werden anhand der Darstellungen in den Fig. 5 bis 17 eine Wellenwickelvorrichtung 50 zum Herstellen der Wellenwickelmatte 20 sowie ein damit durchführbares Wellenwickelverfahren zum Wickeln einer solchen Wellenwickelmatte 20 näher erläutert.

Fig. 5 zeigt eine Übersicht über die Wellenwickelvorrichtung 50. Die Wellenwickelvorrichtung 50 dient zum Wickeln der Wellenwickelmatte 20, welche zum Bilden der Spulenwicklung 12 für die elektrische Maschine geeignet ist. Die Wellenwickelvorrichtung 50 weist wenigstens eine Halteeinrichtung 52, 54, 56 und eine um eine Drehachse 58 drehbare Wickeleinrichtung 60 auf, die wenigstens eine Biegekante 62, 64 aufweist.

An der wenigstens einen Halteeinrichtung 52, 54, 56 ist wenigstens eine erste Backe 66 zum lösbaren Festhalten der Drähte 24 an der Halteeinrichtung 52, 54, 56 vorgesehen.

An der Wickeleinrichtung 60 ist wenigstens eine zweite Backe 68 zum lösbaren Halten der Drähte 24 im Bereich der Biegekante 62, 64 vorgesehen.

Weiter ist eine Backenaustauschanordnung 70 zum Austauschen der wenigstens einen ersten Backe 66 und der wenigstens einen zweiten Backe 68 vorgesehen.

Vorzugsweise hat die Backenaustauschanordnung 70 eine oder mehrere erste Backenaustauscheinheiten 84 zum Austauschen erster Backen 66 und eine oder mehrere zweite Backenaustauscheinheiten zum Austauschen zweiter Backen 68.

Bei der dargestellten Ausführungsform der Wellenwickelvorrichtung 50 ist weiter eine Drahtbereitstellungseinrichtung 72 zum Bereitstellen des Bündels aus parallel geführten Drähten 24 und eine Wickelkopfformeinrichtung 74 sowie eine Ausgabeeinheit 76 zum Übertragen der gewickelten Wellenwickelmatte 20 auf einen Werkstückträger vorgesehen.

Die Drahtbereitstellungseinrichtung 72 hat hier nicht näher dargestellte Lager für Drahtrollen, von denen die einzelnen Drähte 24 abrollbar und parallel zu der wenigstens einen Halteeinrichtung 52 geführt werden können.

Bei der dargestellten Wellenwickelvorrichtung 50 ist nicht nur eine Halteeinrichtung 52, sondern eine Mehrzahl von Halteeinrichtungen 52, 54, 56 vorgesehen, mittels denen Transportschritte und Biegeschritte vor dem Umbiegen der Wickelköpfe an den Drähten 24 durchführbar sind.

In dem konkreten Ausführungsbeispiel ist eine erste Halteeinrichtung 52 vorgesehen, die zum Drahtvorschub ausgebildet ist. Insbesondere ist die erste Halteeinrichtung 52 als erste Maschinenachse in einer Vorschubrichtung für den Draht (nach links und rechts in Fig. 5) hin und her bewegbar.

Weiter ist eine zweite Halteeinrichtung 54 vorgesehen, die selbst innerhalb der Wellenwickelvorrichtung 50 feststehend oder stationär ausgebildet ist. Diese zweite Halteeinrichtung 54 bildet somit eine zweite Maschinenachse.

Weiter ist eine dritte Halteeinrichtung 56 vorgesehen, die als dritte Maschinenachse in einer Richtung quer zu der Vorschubrichtung - in Richtung der Breite des Drahtbündels bzw. der Drehachse 58 - hin und her bewegbar ist, um einen Versatz für die schrägen Drahtabschnitte 30 zu biegen. Hierzu ist die dritte Halteeinrichtung 56 relativ zu der zweiten Halteeinrichtung 54 in der Fig. 5 nach oben und nach unten bewegbar.

Alle vorgenannten Halteeinrichtungen 52, 54, 56 sind gemeinsam auf und ab bewegbar, um der Bewegung der wenigstens einen Biegekante 62, 64 zu folgen.

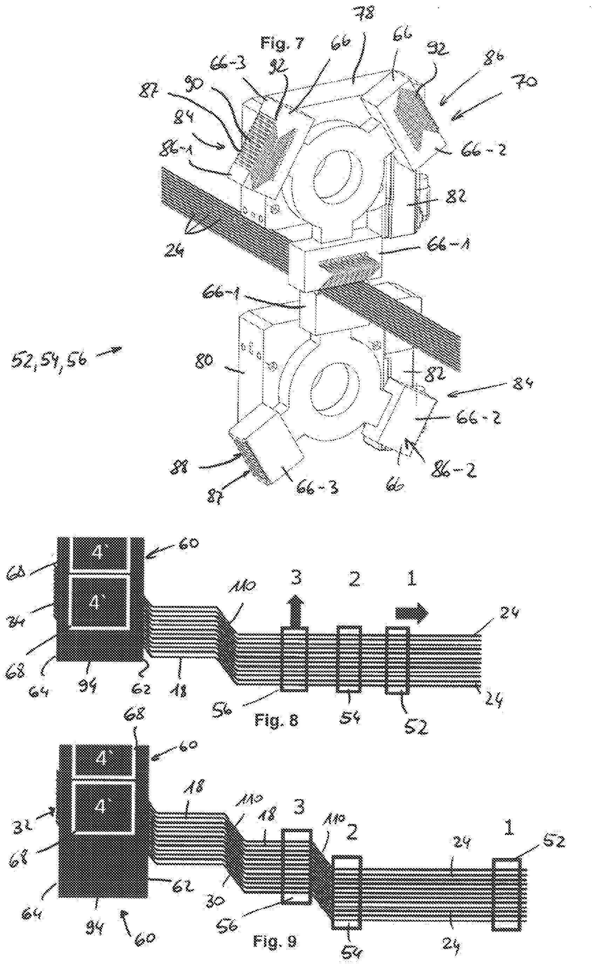

Jede der Halteeinrichtungen 52, 54, 56 weist eine Mehrzahl von ersten Backen 66 auf. Dabei weist jede Halteeinrichtung 52, 54 relativ aufeinander zu bewegbare Paare von zugeordneten ersten Backen 66 auf. Die Fig. 6 und 7 zeigen einen beispielhaften Aufbau für jede der Halteeinrichtungen 52, 54, 56. Hierzu sind ein erster Backenträger 78 und ein zweiter Backenträger 80 vorgesehen, die an Backenträgerführungen 82, wie durch Pfeile in Fig. 6 dargestellt, aufeinander zu bewegbar sind, um zwischen einem entsprechenden Paar erster Backen 66 die Drähte 24 zwischen sich einzuklemmen oder voneinander weg bewegbar sind, um die Drähte 24 frei zu geben.

Wie in den Fig. 6 und 7 dargestellt, sind unterschiedliche erste Backen 66-1, 66-2, 66-3 jeweils paarweise vorgesehen, die zum Definieren unterschiedlicher Drahtabstände d1, d2, d3 ausgebildet sind.

Insgesamt sind ein Paar erster Backen 66-1 für den ersten Drahtabstand d1, ein Paar erster Backen 66-2 für den zweiten Drahtabstand d2 und ein Paar erster Backen 66-3 für den dritten Drahtabstand d3 vorgesehen.

Die Backenaustauschanordnung 70 weist eine erste Backenaustauscheinheit 84 zum Austauschen des jeweiligen Paares erster Backen 66 an der jeweiligen Halteeinrichtung 52, 54, 56 auf.

Bei der in den Fig. 6 und 7 dargestellten Ausführungsform ist die Backenaustauscheinheit 84 zum Austauschen der ersten Backen 66 als Drehmagazin 86 ausgebildet. Es ist ein erstes Drehmagazin 86-1 mit den einen unterschiedlichen ersten Backen 66-1, 66-2, 66-3 an dem ersten Backenträger 78 und ein zweites Drehmagazin 86-2 mit den entsprechenden Gegenstücken der ersten Backen 66-1, 66-2, 66-3 an dem zweiten Backenträger 80 vorgesehen.

Die Backen an dem zweiten Backenträger 80 weisen an ihrer Klemmfläche feststehende Aufnahmenuten 88 als Drahtaufnahmen 87 auf, deren Abstand dem gewünschten Drahtabstand d1, d2, d3 entspricht. Die Backen an dem ersten Backenträger 78 weisen an ihrer Klemmfläche ein flexibles Profil mit flexiblen Aufnahmenuten 90 als Drahtaufnahmen 87 auf, deren Abstand ebenfalls dem jeweiligen gewünschten Drahtabstand d1, d2, d3 entspricht, wobei die Lage der Aufnahmenuten 90 jedoch flexibel ausgebildet ist. Dies ist beispielsweise durch Federelemente 92 realisiert, die flexibel ausweichen können. Durch die Federelemente 92 kann eine flexible Klemmkraft auf die Drähte 24 ausgeübt werden.

Soll beim Übergang von einem der Bereiche 36, 40, 44 in einen anderen ein anderer Drahtabstand d1, d2, d3 bereitgestellt werden, dann wird durch Drehung der Drehmagazine 86-1, 86-2 das jeweils hierfür passende Paar erster Backen 66-1, 66-2, 66-3 bereitgestellt. Somit ist ein Backenwechselsystem geschaffen.

Die ersten Backen 66 sind beispielsweise auf einem Drehmodul angeordnet und werden je nach Drahtabstand d1, d2, d3 automatisch gewechselt. In den dargestellten Ausführungsbeispielen sind zwei Drehmodule mit jeweils drei Backen vorgesehen. Somit können drei verschiedene Drahtabstände gewickelt werden. Die Kontur der ersten Backen 66-1, 66-2, 66-3 gibt den Drahtabstand vor. Mit der Backe an dem zweiten Backenträger 80 und der gegenüberliegenden Backe an dem ersten Backenträger 78 mit flexiblem Profil wird jeder Draht 24 zuverlässig geklemmt.

Wie bereits oben erwähnt, sind die zweite Halteeinrichtung 54 und die dritte Halteeinrichtung 56 im Wesentlichen gleich aufgebaut wie die erste Halteeinrichtung 52. Die Backenträgerführung 82 der zweiten Halteeinrichtung 54 kann dabei feststehend in der Wellenwickelvorrichtung 50 vorgesehen sein, indem sie auf einem relativ zu einem Maschinenbett lediglich in der Höhe verfahrbaren Halteeinrichtungsträger (nicht dargestellt) verankert ist. Die Backenträgerführung 82 der ersten Halteeinrichtung 52 ist auf einem in Drahtvorschubrichtung hin und her bewegbaren, nicht näher dargestellten Schlitten oder dergleichen angeordnet, der z.B. auf dem Halteeinrichtungsträger verfahrbar gelagert ist. Die Backenträgerführung 82 der dritten Halteeinrichtung 56 ist quer hierzu beweglich, beispielsweise ebenfalls auf einem nicht näher dargestellten Schlitten angeordnet, der ebenfalls auf dem Halteeinrichtungsträger verfahrbar ist.

Wie Fig. 5 zeigt, auf die nun wiederum Bezug genommen wird, weist die Wickeleinrichtung 60 bei dem hier näher dargestellten Ausführungsbeispiel ein um die Drehachse 58 drehbares Wickelschwert 94 auf. Dieses ist leistenartig mit konisch zulaufenden Enden ausgebildet, so dass an den Schmalseiten jeweils eine erste Biegekante 62 und eine gegenüberliegende zweite Biegekante 64 ausgebildet ist.

Weiter weist die Wickeleinrichtung 60 eine Mehrzahl von zweiten Backen 68 auf. Die zweiten Backen 68 sind als Umlaufbacken aufgeführt. Sie können auf eine Umlaufbahn 96 von dem Ende der Wickeleinrichtung 60 zu dessen Anfang geführt werden. Innerhalb der Wickeleinrichtung 60 sind Backenführungen 98 vorgesehen, auf denen die umlaufenden zweiten Backen 68 zunächst zum Erfassen der Drähte 94 hin zu der jeweiligen Seite des Wickelschwertes 94 geführt werden und dann entlang dem Wickelschwert 94 in Richtung quer zur Vorschubrichtung (nach oben in Fig. 5), d.h. insbesondere in Richtung der Drehachse 58, geführt werden.

Die Backenführung 98 und die Umlaufbahn 96 bilden zweite Backenaustauscheinheiten der Backenaustauschanordnung 70. Es sind mehrere unterschiedliche zweite Backen 68 vorgesehen, die jeweils Drahtaufnahmen 87 mit feststehenden Aufnahmenuten 88 aufweisen, wie sie oben hinsichtlich der ersten Backen 66-1, 66-2, 66-3 des zweiten Backenträgers 80 erläutert worden sind. Die unterschiedlichen zweiten Backen 68 haben entsprechend den jeweils handzuhabenden Drahtabständen d1, d2, d3 zueinander beabstandete Aufnahmenuten 88 als Drahtaufnahmen 87.

Die Umlaufbahn 96 bildet eine Backenrückführeinrichtung 100 zum Rückführen zweiter Backen 68 von einem Ende der Backenführung 98 zu einem Beginn der Backenführung 98. Die Umlaufbahn 96 ist - beispielsweise über nicht dargestellte Puffer oder Aufnahmemagazine für die zweiten Backen 68 - so ausgebildet, dass jeweils die passenden zweiten Backen mit den korrekten Abständen zwischen den Drahtaufnahmen 87 am Beginn der Backenführung 98 zugeführt werden. Somit ist auch eine Backenzuführeinrichtung 102 zum Zuführen entsprechend passender zweiter Backen 68 in die Backenführung 98 vorgesehen.

Die zweiten Backen 68 weisen eine Klemmfläche an einem Block oder Körper auf, mittels derer Sie zum formschlüssigen Führen an der z.B. als Schiene ausgebildeten Backenführung 98 geeignet sind.

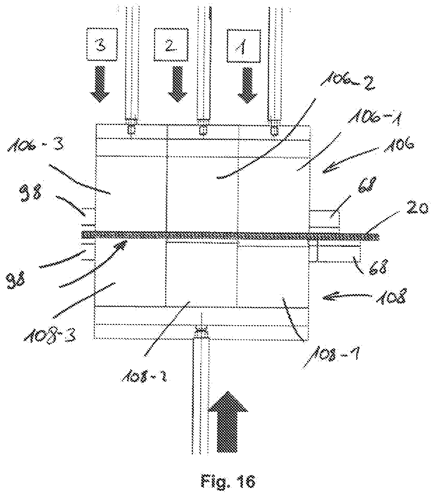

Die Backenführung 98 erstreckt sich in Richtung der Drehachse 58 über das Wickelschwert 94 hinaus in die Wickelkopfformeinrichtung 74, die näher in den Fig. 15 und 16 dargestellt ist.

Die Wickelkopfformeinrichtung 74 weist eine Formeinheit 104 mit einem oder mehreren Formstempeln 106 und einem Gegenhalter 108 auf. Bei der dargestellten Ausführungsform sind ein erster Formstempel 106-1 zum Formen der Wickelköpfe 34 an dem ersten Bereich 36, ein zweiter Formstempel 106-2 zum Formen der Wickelköpfe 34 an dem zweiten Bereich 40 und ein dritter Formstempel 106-3 zum Formen der Wickelköpfe 34 an dem dritten Bereich 44 vorgesehen. Die Formstempel 106-1, 106-2, 106-3 haben jeweils unterschiedliche Formgeometrien. Beim Formen der Wickelköpfe 34 wird die Wellenwickelmatte 20 in den umlaufenden zweiten Backen 68 gehalten.

Im Folgenden wird das mit der Wellenwickelvorrichtung 50 durchführbare Wellenwickelverfahren anhand der Darstellungen in den Fig. 8 bis 17 näher erläutert.

Bei der Darstellung von Fig. 8 werden zunächst zu Beginn der Herstellung einer Wellenwickelmatte 20 die Drehmodule an allen Halteeinrichtungen 52, 54, 56 auf die ersten Backen 66-1 für den ersten Drahtabstand d1 eingestellt. Die Backenträger 78, 80 der zweiten Halteeinrichtung 54 und der dritten Halteeinrichtung 56 werden aufeinander zu bewegt, so dass die Drähte 24 zwischen den ersten Backen 66 der zweiten Halteeinrichtung 54 und der dritten Halteeinrichtung 56 geklemmt werden, wobei die Drähte 24 in den Drahtaufnahmen 87 mit dem Drahtabstand d1 gehalten werden. Die Backenträger 78, 80 der ersten Halteeinrichtung 52 werden voneinander weg bewegt. Die erste Halteeinrichtung 52 wird in Richtung Drahtbereitstellungseinrichtung 72 bewegt. Die dritte Halteeinrichtung 56 wird in Richtung parallel zur Drehachse 58 bewegt.

Somit klemmen die ersten Backen 66 der zweiten Halteeinrichtung 54 und die ersten Backen 66 der dritten Halteeinrichtung 56 den Draht 24. Die ersten Backen 66 der ersten Halteeinrichtung 52 sind geöffnet. Die Bewegung der zweiten Halteeinrichtung 54 und der dritten Halteeinrichtung 56 zueinander erzeugen den Versatz 110. Synchron dazu werden die umlaufenden zweiten Backen 68 auf dem Wickelschwert 94 aufgeschoben, wobei auch hier die jeweiligen zweiten Backen 68 mit den auf den ersten Drahtabstand d1 eingestellten Abständen der Drahtaufnahmen 87 zum Einsatz kommen. Die umlaufenden zweiten Backen 68 werden entsprechend in den Backenführungen 98 weitergeschoben.

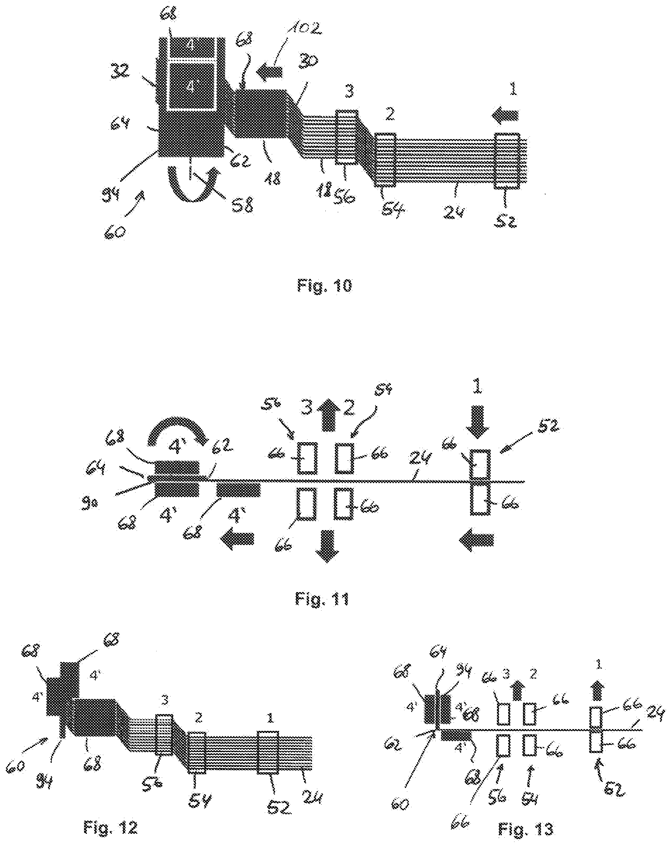

Es ergibt sich so die Situation, wie sie in Fig. 9 dargestellt ist. Ausgehend von dieser Situation werden, wie dies in den Fig. 10 und 11 dargestellt ist, die Backenträger 78, 80 der ersten Halteeinrichtung 52 aufeinander zu bewegt, so dass die ersten Backen 66 der ersten Halteeinrichtung 52 die Drähte 24 klemmen, während die Backenträger 78, 80 der zweiten Halteeinrichtung 54 und der dritten Halteeinrichtung 56 voneinander weg bewegt werden, so dass diese die Drähte 24 frei geben. Gleichzeitig wird eine neue zweite Backe 68 vor dem Wickelschwert 94 durch die Backenzuführeinrichtung 102 zugeführt. Diese zweite Backe 78 hält die Drähte 24 auf den korrekten Abstand und dient als Gegenlager beim Biegen des Drahtes durch Drehung des Wickelschwertes 94. Das Wickelschwert 94 wird nun gedreht. Synchron zum sich einstellenden Zug an dem Draht 24 durch das Wickelschwert 94 wird die erste Halteeinrichtung 52 auf das Wickelschwert 94 zu bewegt. Gleichzeitig bewegt die Backenzuführeinrichtung 102 die neu bereitgestellte zweite Backe 68 auf das Wickelschwert 94 zu. Die neu bereitgestellte zweite Backe 68 wird dabei von der Position vor dem Wickelschwert 94 zur Position unter das Wickelschwert 94 bewegt. Diese zweite Backe 68 führt dabei die Drähte 24 und dient als Gegenlager beim Biegen.

Bei einer bevorzugten Ausgestaltung ist die Drehachse 58 des Wickelschwertes 94 ortsfest. Daher sind die Halteeinrichtungen 52, 54, 56 auf einem gemeinsamen auf- und abbewegbaren, nicht näher dargestellten Halteeinrichtungsträger befestigt, der dafür sorgt, dass die zugeführten Drähte 24 der Bewegung der Biegekanten 62, 64 folgt. Dies ist in den Fig. 12 und 13 dargestellt.

Bei der Fig. 14 befindet sich die Wellenwickelvorrichtung 50 wieder in der Anfangsposition, wie sie auch in der Fig. 8 dargestellt ist. Bei jeder halben Umdrehung des Wickelschwertes 94 wird eine neue umlaufende zweite Backe 68 auf die Backenführung 68 aufgefädelt. Die entsprechend aufgefädelten zweiten Backen 68 verbleiben bis nach der Formeinheit 104 auf der zugeordneten Backenführung 98 und werden anschließend mittels der Backenrückführeinrichtung 100 aufgenommen und auf der Umlaufbahn 96 wieder zurückgeführt.

Auf diese Weise werden zunächst die Wicklungen des ersten Bereiches 36 gewickelt. Zum Übergang auf den zweiten Bereich 40 werden dann durch die Backenaustauschanordnung 70 die ersten Backen 66 an den Halteeinrichtungen 52, 54, 56 ausgetauscht. Hier erfolgt durch eine Drehung der Drehmagazine 36-1, 36-2 ein Wechsel auf die erste Backe 66-2 für den zweiten Drahtabstand d2. Entsprechend werden dann unterschiedliche zweite Backen 68 durch die Backenzuführeinrichtung 102 zugeführt und an der Position vor dem Wickelschwert 94 bereitgestellt. Gleichzeitig erfolgt eine Anpassung der Bewegungsstrecke der dritten Halteeinrichtung 56. In der gleichen Weise erfolgt der Übergang von dem zweiten Bereich 40 zu dem dritten Bereich 44.

Die entsprechenden bereits gewickelten Bereiche der Wellenwickelmatte 20 werden unter Führung der umlaufenden zweiten Backen 68, die in den Backenführungen 98 geführt werden, in Richtung der Drehachse 58 zunächst auf dem Wickelschwert 94 weitergeführt und so in die in den Fig. 15 und 16 dargestellte Formeinheit 104 überführt. So wird die Wellenwickelmatte 20 nach dem Umbiegen an dem Wickelschwert 94 in den umlaufenden zweiten Backen 68 weitergeführt. In der Formeinheit 104 werden nun die zweiten Backen 68, die sich entsprechend gegenüberliegen, aufeinandergedrückt. Anschließend wird der Wickelkopf 34 mit dem Gegenhalter 108 und dem oder den Formstempeln 106 geformt. Durch die zweiten Backen 68 werden die Drähte 24 auf dem definierten Drahtabstand d1, d2, d3 gehalten, und ein Verdrehen des Drahtes 24 während des Formens wird verhindert. Beim Formen des Wickelkopfes 34 wird dieser durch die Formstempel 106 flach gedrückt. Je nach Lage im Stator - siehe hierzu Fig. 17 - kann der Wickelkopf 34 durch eine unterschiedliche Stempelgeometrie etwas nach außen oder nach innen geformt werden. Hierzu sind unterschiedliche Formstempel 106-1, 106-2, 106-3 gemäß Fig. 16 vorgesehen.

Somit lässt sich die in Fig. 3 gezeigte Wellenwickelmatte 20 herstellen. Die Wellenwickelmatte 20 dient dazu, mehrfach um den Umfang eines Stators 10 herumgewickelt zu werden. Dadurch ergeben sich unterschiedliche Radien für die unterschiedlichen Lagen 38, 42, 46. Dies ergab bisher Probleme beim Einsetzen in die einzelnen Nuten. Daher ist die Wellenwickelmatte 20 in drei unterschiedliche Abschnitte - Bereiche 36, 40, 44 - aufgeteilt, die jeweils unterschiedliche Drahtabstände d1, d2, d3 aufweisen. Die Wellenwickelmatte 20 selbst weist zwei Drahtlagen 27, 28 auf mit jeweils Umbiegungen an der Seite - Wickelköpfe 34. Die Abstände zwischen den Drähten sind nur sehr gering, sie liegen im unterem Millimeterbereich.

Ein beispielhafter Aufbau der Wickelmaschine - Wellenwickelvorrichtung 50 - ist wie folgt:
Erst gibt es eine Drahtabwicklung. Danach erfolgt ein Drahtvorschub. Hierzu gibt es eine als erste Maschinenachse wirkende Einrichtung 52, die sich in Drahtvorschubrichtung bewegen kann und dabei über Festhaltebacken die Drähte 24 mitnimmt.

Daraufhin gibt es eine als zweite Maschinenachse wirkende weitere Einrichtung 56, die sich quer dazu bewegen kann, um einen Versatz 110 der Drähte 24 zueinander zu biegen. Anschließend an diese Einrichtung 56 erfolgt das Wickeln, z.B. um ein Wickelschwert 94, welches sich um eine Drehachse 58 quer zu der Drahtvorschieberichtung drehen kann, um die Wicklungen vorzunehmen. Im Bereich des Wickelschwerts 94 gibt es eine quer zu der Vorschubachse verlaufende Bahn, auf der unterschiedliche zweite Backen 68 aufgesetzt werden können. Diese zweiten Backen 68 werden mit entsprechenden Drahtaufnahmenuten geliefert. Bei der Ausgestaltung mit unterschiedlichen Drahtabständen werden entsprechende Nuten mit entsprechenden Drahtabständen zugeliefert. Damit werden die nebeneinanderliegenden Drähte 24 erfasst und durch Drehung der Wickeleinrichtung 60 umgebogen. Durch den Versatz derjenigen Halteeinrichtung 56, welche die seitliche Verschiebung bewirkt, wird dann das Drahtpaket zur Seite geschoben. Es erfolgt dann die Umbiegung des nächsten Drahtpakets.

Am Ende der Bahn ist dann eine Formeinheit 104 vorgesehen, die zum Formen der Wickelköpfe 34 dient. Die Formung der Wickelköpfe 34 erfolgt ebenfalls mithilfe der zweiten Backen 68. Diese geben so den definierten Drahtabstand vor.

Der definierte Drahtabstand ergibt sich aufgrund des Festhaltens der zweiten Backen 68 während des Umbiegens mittels der Wickeleinrichtung 60. Die Umbiegung ergibt hierdurch jeweils den richtigen Drahtabstand.

Jede der drei Halteeinrichtungen 52, 54, 56 hat eine Backenaustauscheinheit 84, mittels der erste Backen 66 mit unterschiedlichen Drahtabstandsnuten eingesetzt werden können.

Wird der Drahtabstand geändert, dann wird entsprechend die andere Backe eingesetzt; außerdem wird der Versatz der dritten Halteeinrichtung 56, welche die seitliche Verbiegung durchführt, geändert.

Die Formeinheit 104 ist eine Presseinheit, die dann, wenn die Wickeleinrichtung 60 steht, zusammenfährt und die Wickelköpfe 34 verpresst.

So kommt am Ende der Formeinheit 104 die fertig gewickelte und mit geformten Wickelköpfen 34 versehene Wellenwickelmatte 20 heraus, die dann in den Stator 10 passend eingesetzt werden kann.

Die unterschiedlichen Einheiten und Einrichtungen der Wellenwickelvorrichtung 50 können Elektromotoren, wie z.B. Stellmotoren, sein. Auch pneumatische und hydraulische Antriebe sind möglich.

### Bezugszeichenliste:

- 10: Stator
- 12: Spulenwicklung
- 14: Haltekörper
- 16: Nut
- 18: geradlinige Drahtabschnitte
- 20: Wellenwickelmatte
- 24: Drähte
- 26: erste Drahtlage
- 28: zweite Drahtlage
- 30: schräge Drahtabschnitte
- 32: Umbiegung
- 34: Wickelkopf
- 36: erster Bereich
- 38: äußere Lage
- 40: zweiter Bereich
- 42: mittlere Lage
- 44: dritter Bereich
- 46: innere Lage
- 50: Wellenwickelvorrichtung
- 52: erste Halteeinrichtung
- 54: zweite Halteeinrichtung
- 56: dritte Halteeinrichtung
- 58: Drehachse
- 60: Wickeleinrichtung
- 62: erste Biegekante
- 64: zweite Biegekante
- 66: erste Backe
- 66-1: erste Backe für ersten Drahtabstand
- 66-2: erste Backe für zweiten Drahtabstand
- 66-3: erste Backe für dritten Drahtabstand
- 68: zweite Backe
- 70: Backenaustauschanordnung
- 72: Drahtbereitstellungseinrichtung
- 74: Wickelkopfformeinrichtung
- 76: Ausgebeeinheit
- 78: erster Backenträger
- 80: zweiter Backenträger
- 82: Backenträgerführung
- 84: Backenaustauscheinheit
- 86: Drehmagazin
- 86-1: erstes Drehmagazin
- 86-2: zweites Drehmagazin
- 87: Drahtaufnahme
- 88: feststehende Aufnahmenuten
- 90: flexible Aufnahmenuten
- 92: Federelemente
- 94: Wickelschwert
- 96: Umlaufbahn
- 98: Backenführung
- 100: Backenrückführeinrichtung
- 102: Backenzuführeinrichtung
- 104: Formeinheit
- 106: Formstempel
- 106-1: Formstempel für Wickelkopfform am ersten Bereich
- 106-2: Formstempel für Wickelkopfform am zweiten Bereich
- 106-3: Formstempel für Wickelkopfform am dritten Bereich
- 108: Gegenhalter
- 110: Versatz
- d1, d2, d3: Drahtabstand

## Patentansprüche

1. Wellenwickelverfahren zum Wickeln einer Wellenwickelmatte (20) zum Bilden einer Spulenwicklung (12) einer elektrischen Maschine, umfassend Wickeln eines oder mehrerer Drähte (24) mit einem vordefinierten Drahtabstand (d1, d2, d3) zwischen Drahtabschnitten (18, 30), **dadurch gekennzeichnet,**
**dass** der Drahtabstand (d1, d2, d3) für unterschiedliche Bereiche der Wellenwickelmatte (20) unterschiedlich eingestellt wird, wobei zum Bilden unterschiedlicher Drahtabstände (d1, d2, d3) ein Austausch wenigstens einer ersten Backe (66) an einer Halteeinrichtung (52, 54, 56) zum Halten im Wesentlichen parallel geführter Drähte (24) und/oder ein Austausch wenigstens einer zweiten Backe (68) an einer drehbaren Wickeleinrichtung (60) erfolgt.

2. Wellenwickelverfahren nach Anspruch 1,
**dadurch gekennzeichnet,**
**dass** zum Bilden unterschiedlicher Drahtabstände (d1, d2, d3) ein Versatz zwischen zwei durch einen geneigten Drahtabschnitt (30) verbundenen Drahtabschnitten (18, 30) geändert wird.

3. Wellenwickelverfahren nach einem der voranstehenden Ansprüche, **gekennzeichnet durch** Transportieren eines bereits gewickelten Bereichs (36, 40, 44) der herzustellenden Wellenwickelmatte (20) mittels mehrerer Backen (68) durch Bewegen der Backen (68) auf einer sich in Richtung einer Drehachse (58) einer Wickeleinrichtung erstreckenden Backenführung (82).

4. Wellenwickelverfahren nach Anspruch 3,
**gekennzeichnet durch** Rückführung von Backen (68) von dem Ende der Backenführung (82) zu deren Beginn.

5. Wellenwickelvorrichtung (50) zum Wickeln einer Wellenwickelmatte (20) gemäß dem Wellenwickelverfahren nach Anspruch 1 zum Bilden einer Spulenwicklung (12) einer elektrischen Maschine, umfassend: wenigstens eine Halteeinrichtung (52, 54, 56) zum Halten im Wesentlichen parallel geführter Drähte (24), an der eine erste Backe (66) zum Kontakt mit den Drähten (24) vorgesehen ist,
eine um eine Drehachse (58) drehbare und wenigstens eine Biegekante (62, 64) aufweisende Wickeleinrichtung (60), an der eine zweite Backe (68) zum Kontakt mit den Drähten (24) zwecks Halten der Drähte (24) beim Biegen um die Biegekante (62, 64) vorgesehen ist, **gekennzeichnet durch**
eine Backenaustauschanordnung (70) zum Austauschen der ersten und/oder der zweiten Backe (66, 68), wobei die Wellenwickelvorrichtung (50) derart ausgebildet ist, dass zum Bilden unterschiedlicher Drahtabstände (d1, d2, d3) ein Austausch wenigstens einer ersten Backe (66) an der Halteeinrichtung (52, 54, 56) und/oder ein Austausch wenigstens einer zweiten Backe (68) an der drehbaren Wickeleinrichtung (60) erfolgt.

6. Wellenwickelvorrichtung (50) nach Anspruch 5,
**dadurch gekennzeichnet,**
**dass** die Wellenwickelvorrichtung (50) zum derartigen Wickeln der Wellenwickelmatte (20) ausgebildet ist, dass im Wesentlichen geradlinige Drahtabschnitte (18) in einem vordefinierten Drahtabstand (d1, d2, d3) derart zueinander angeordnet werden, dass die Wellenwickelmatte (20) Bereiche (36, 40, 44) hat, in denen der vordefinierte Drahtabstand (d1, d2, d3) unterschiedlich ist.

7. Wellenwickelvorrichtung (50) nach Anspruch 6,
**dadurch gekennzeichnet,**
**dass** die Wellenwickelvorrichtung (50) zum derartigen Wickeln der Wickelmatte (20) ausgebildet ist, dass sich ein erster Bereich (36) der Wickelmatte (20) mit einem ersten Drahtabstand d1 von einem Ende der Wellenwickelmatte (20) in Längserstreckungsrichtung der Wellenwickelmatte (20) erstreckt, dass sich ein dritter Bereich (44) mit einem dritten Drahtabstand d3 in Längserstreckungsrichtung der Wellenwickelmatte (20) bis zu dem anderen Ende erstreckt, dass zwischen dem ersten Bereich (36) und dem dritten Bereich (44) ein zweiter Bereich (40) mit einem zweiten Drahtabstand d2 vorgesehen ist und dass gilt: d1<d2<d3.

8. Wellenwickelvorrichtung nach einem der Ansprüche 5 bis 7.
**dadurch gekennzeichnet,**
**dass** die Wickeleinrichtung (60) eine Backenführung (98) zum Führen mehrerer zweiter Backen (68) auf einer sich mit wenigstens einer Richtungskomponente in Richtung der Drehachse (58) verlaufenden Backenführungsbahn aufweist.

9. Wellenwickelvorrichtung (50) nach Anspruch 8,
**dadurch gekennzeichnet,**
**dass** die Backenaustauschanordnung (70) eine Backenzuführeinrichtung (102) zum Zuführen zweiter Backen (68) in die Backenführung (98) und/oder eine Backenrückführeinrichtung (100) zum Rückführen zweiter Backen (68) von einem Ende der Backenführung (98) zu einem Beginn der Backenführung (98) aufweist.

10. Wellenwickelvorrichtung (50) nach Anspruch 8 oder 9,
**dadurch gekennzeichnet,**
**dass** weiter im Bereich der Backenführung (98) eine Wickelkopfformeinrichtung (74) zum Formen von Wickelköpfen der Wellenwicklungsmatte (20) unter Halterung derselben an wenigstens einer zweiten Backe (68) vorgesehen ist.

11. Wellenwickelvorrichtung (50) nach einem der Ansprüche 5 bis 10,
**dadurch gekennzeichnet,**
**dass** die Backenaustauschanordnung (70) an der Haltevorrichtung ein Drehmagazin (86) zum Austausch erster Backen (66) aufweist.

12. Wellenwickelvorrichtung (50) nach einem der Ansprüche 5 bis 11,
**dadurch gekennzeichnet,**
**dass** die ersten und/oder zweiten Backen (66, 68) Drahtaufnahmen (87) zur seitlichen Positionierung der im Wesentlichen parallel geführten Drähte (24) aufweisen.

13. Wellenwickelvorrichtung (50) nach Anspruch 12,
**dadurch gekennzeichnet,**
**dass** unterschiedliche erste und/oder zweite Backen (66, 68) mit unterschiedlichen Abständen zwischen ihren Drahtaufnahmen (87) vorgesehen sind und durch die Backenaustauschanordnung (70) austauschbar sind.

14. Wellenwickelvorrichtung (50) nach einem der Ansprüche 5 bis 13,
**dadurch gekennzeichnet,**
**dass** mehrere Halteeinrichtungen (52, 54, 56) vorgesehen sind, von denen wenigstens eine relativ zu wenigstens einer anderen und/oder zu der Wickeleinrichtung (60) in einer Richtung quer zu der Drehachse (58) und/oder in einer Richtung parallel zu der Drehachse (58) vorzugsweise angetrieben bewegbar ist und/oder
**dass** wenigstens eine feststehende Halteeinrichtung (52, 54, 56) und wenigstens eine bewegliche Halteeinrichtung (52, 54, 56) vorgesehen sind und/oder dass ein Bewegungshub einer beweglichen Halteeinrichtung (52, 54, 56) einstellbar ist.

## Claims

1. Wave winding method for winding a wave winding mat (20) to form a coil winding (12) of an electrical machine, comprising winding one or more wires (24) with a predefined wire spacing (d1, d2, d3) between wire sections (18, 30),
**characterized in**
**that** the wire spacing (d1, d2, d3) is set differently for different areas of the shaft winding mat (20), wherein for forming different wire spacings (d1, d2, d3) an exchange of at least one first jaw (66) on a holding device (52, 54, 56) for holding substantially parallel guided wires (24) and/or an exchange of at least one second jaw (68) on a rotatable winding device (60) takes place.

2. Wave winding method according to claim 1,
**characterized in**
**that** for forming different wire spacings (d1, d2, d3) an offset between two wire sections (18, 30) connected by an inclined wire section (30) is changed.

3. Wave winding method according to any one of the preceding claims,
**characterized by**
transporting an already wound portion (36, 40, 44) of the wave winding mat (20) to be produced by means of a several jaws (68) by moving the jaws (68) on a jaw guide (82) extending in the direction of an axis of rotation (58) of a winding device.

4. Wave winding method according to claim 3,
**characterized by**
returning jaws (68) from the end of the jaw guide (82) to the beginning thereof.

5. Wave winding device (50) for winding a wave winding mat (20) according to the winding method of claim 1 for forming a coil winding (12) of an electric machine, comprising:
at least one holding device (52, 54, 56) for holding substantially parallel guided wires (24), on which a first jaw (66) is provided for contact with the wires (24), a winding device (60) rotatable about said axis of rotation (58) and having at least one bending edge (62, 64) where a second jaw (68) for contacting said wires (24) to hold said wires (24) when bent about said bending edge (62, 64) is provided, **characterized by**
a jaw exchange arrangement (70) for exchanging the first and/or the second jaw (66, 68), the wave winding device (50) being designed in such a way that, in order to form different wire spacings (d1, d2, d3), an exchange of at least one first jaw (66) takes place on the holding device (52, 54, 56) and/or an exchange of at least one second jaw (68) takes place on the rotatable winding device (60).

6. Wave winding device (50) according to claim 5,
**characterized in**
**that** the wave winding device (50) is designed for winding the wave winding mat (20) in such a way that essentially straight wire sections (18) are arranged with respect to one another at a predefined wire spacing (d1, d2, d3) in such a way that the wave winding mat (20) has regions (36, 40, 44) in which the predefined wire spacing (d1, d2, d3) is different.

7. Wave winding device (50) according to claim 6,
**characterized in**
**that** the wave winding device (50) is designed for winding the winding mat (20) in such a way that a first region (36) of the winding mat (20) with a first wire spacing d1 extends from one end of the winding mat (20) in longitudinal extension of the wave winding mat (20), in that a third region (44) with a third wire spacing d3 extends in the longitudinal extension direction of the wave winding mat (20) as far as the other end, in that a second region (40) with a second wire spacing d2 is provided between the first region (36) and the third region (44), and in that d<d2<d3 applies.

8. Wave winding device according to any of claims 5 to 7, **characterized in that** the winding device (60) comprises a jaw guide (98) for guiding a plurality of second jaws (68) on a jaw guide path extending with at least one directional component in the direction of the axis of rotation (58).

9. Wave winding device (50) according to claim 8,
**characterized in**
**that** the jaw exchange arrangement (70) comprises a jaw feed means (102) for feeding second jaws (68) into the jaw guide (98) and/or a jaw return means (100) for returning second jaws (68) from an end of the jaw guide (98) to a beginning of the jaw guide (98).

10. Wave winding device (50) according to claim 8 or 9,
**characterized in**
**that** further in the area of the jaw guide (98) a winding head forming device (74) is provided for forming winding heads of the shaft winding mat (20) while holding the same on at least a second jaw (68).

11. Wave winding device (50) according to any one of claims 5 to 10,
**characterized in**
**that** the jaw replacement arrangement (70) comprises a rotary magazine (86) on the holding device for replacing first jaws (66).

12. Wave winding device (50) according to any one of claims 5 to 11,
**characterized in**
**that** the first and/or second jaws (66, 68) comprise wire receptacles (87) for lateral positioning of the substantially parallel guided wires (24).

13. Wave winding device (50) according to claim 12,
**characterized in**
**that** different first and/or second jaws (66, 68) are provided with different distances between their wire receptacles (87) and are exchangeable by the jaw exchange arrangement (70).

14. Wave winding device (50) according to any one of claims 5 to 13,
**characterized in**
**that** a plurality of holding devices (52, 54, 56) are provided, at least one of which is movable relative to at least one other and/or to the winding device (60) in a direction transverse to the axis of rotation (58) and/or in a direction parallel to the axis of rotation (58), preferably in a driven manner, and/or
in that at least one fixed holding device (52, 54, 56) and at least one movable holding device (52, 54, 56) are provided and/or in that a movement stroke of a movable holding device (52, 54, 56) is adjustable.

## Revendications

1. Procédé d'enroulement ondulé l'enroulement d'une natte d'enroulement ondulé (20) pour former un bobinage (12) d'une machine électrique, comprenant l'enroulement d'un ou plusieurs fils (24) avec un espacement de fil prédéfini (d1, d2, d3) entre les sections de fil (18, 30), **caractérisé en ce**
**que** l'espacement de fil (d1, d2, d3) est réglé différemment pour différentes zones de la natte d'enroulement ondulé (20), dans lequel, afin de former différents distances de fils (d1, d2, d3), un échange d'au moins une première mâchoire (66) sur un dispositif de maintien (52, 54, 56) pour maintenir des fils guidés sensiblement parallèles (24) et/ou un échange d'au moins une seconde mâchoire (68) sur un dispositif d'enroulement rotatif (60) a lieu.

2. Procédé d'enroulement ondulé selon la revendication 1,
**caractérisé en ce**
**qu'**un décalage entre deux sections de fil (18, 30) reliées par une section de fil inclinée (30) est modifié pour former différentes distances de fil (d1, d2, d3).

3. Procédé d'enroulement ondulé selon l'une quelconque des revendications précédentes, **caractérisé par** le transport d'une partie déjà enroulée (36, 40, 44) de la natte d'enroulement ondulé (20) à produire au moyen d'une pluralité de mâchoires (68) en déplaçant les mâchoires (68) sur un guide de mâchoires (82) s'étendant dans la direction d'un axe de rotation (58) d'un dispositif d'enroulement.

4. Procédé d'enroulement ondulé selon la revendication 3,
**caractérisé par** le retour des mâchoires (68) de l'extrémité du guide des mâchoires (82) au début de celui-ci.

5. Procédé d'enroulement ondulé (50) pour enrouler une natte d'enroulement ondulé (20) selon le procédé d'enroulement de la revendication 1 pour former un enroulement de bobine (12) d'une machine électrique, comprenant:
au moins un dispositif de maintien (52, 54, 56) pour maintenir des fils guidés sensiblement parallèles (24), sur lequel une première mâchoire (66) est prévue pour le contact avec les fils (24),
un enrouleur (60) pouvant tourner autour de l'axe de rotation (58) et ayant au moins un bord de pliage (62, 64), l'enrouleur (60) ayant une seconde mâchoire (68) pour entrer en contact avec les fils (24) afin de maintenir les fils (24) lorsqu'ils sont pliés autour du bord de pliage (62, 64), **caractérisé par** un agencement d'échange de mâchoires (70) pour échanger la première et/ou la deuxième mâchoire (66, 68), le dispositif d'enroulement ondulé (50) étant conçu de telle sorte que, pour former différents écartements de fils (d1, d2, d3), un échange d'au moins une première mâchoire (66) a lieu sur le dispositif de maintien (52, 54, 56) et/ou un échange d'au moins une deuxième mâchoire (68) a lieu sur l'enrouleur rotatif (60).

6. Dispositif d'enroulement ondulé (50) selon la revendication 5, **caractérisé en ce que** le dispositif d'enroulement ondulé (50) est conçu pour enrouler la natte d'enroulement ondulé (20) de telle sorte que des sections de fil (18) essentiellement droites sont disposées les unes par rapport aux autres à une distance de fil prédéfinie (d1, d2, d3) de telle sorte que la natte d'enroulement ondulé (20) présente des zones (36, 40, 44) dans lesquelles la distance de fil prédéfinie (d1, d2, d3) est différente.

7. Dispositif d'enroulement ondulé (50) selon la revendication 6, **caractérisé en ce que** le dispositif d'enroulement ondulé (50) est conçu pour enrouler la natte d'enroulement (20) de telle sorte qu'une première zone (36) de la natte d'enroulement (20) avec un premier distance de fil d1 s'étende à partir d'une extrémité de la natte d'enroulement ondulé (20) dans l'extension longitudinale de la natte d'enroulement ondulé (20), **en ce qu'**une troisième zone (44) avec une troisième distance entre les fils d3 s'étend dans la direction d'extension longitudinale de la natte d'enroulement ondulé (20) jusqu'à l'autre extrémité, **en ce qu'**une deuxième zone (40) avec une deuxième distance entre les fils d2 est prévue entre la première zone (36) et la troisième zone (44), et **en ce que** il s'applique: d<d2<d3.

8. Dispositif d'enroulement ondulé selon l'une quelconque des revendications 5 à 7, **caractérisé en ce**
**que** le dispositif d'enroulement (60) comprend un guide de mâchoires (98) pour guider une pluralité de secondes mâchoires (68) sur un chemin de guidage de mâchoires s'étendant avec au moins une composante directionnelle dans la direction de l'axe de rotation (58).

9. Dispositif d'enroulement ondulé (50) selon la revendication 8, **caractérisé en ce que** l'agencement d'échange de mâchoires (70) comprend un moyen d'alimentation en mâchoires (102) pour alimenter des secondes mâchoires (68) dans le guide de mâchoires (98) et/ou un moyen de retour de mâchoires (100) pour ramener des secondes mâchoires (68) d'une extrémité du guide de mâchoires (98) à un début du guide de mâchoires (98).

10. Dispositif d'enroulement ondulé (50) selon la revendication 8 ou 9,
**caractérisé en ce**
**qu'**en outre, dans la zone du guide de mâchoire (98), un dispositif de formation de tête d'enroulement (74) est prévu pour former des têtes d'enroulement de la natte d'enroulement ondulé (20) en maintenant celui-ci sur au moins une deuxième mâchoire (68).

11. Dispositif d'enroulement ondulé (50) selon l'une quelconque des revendications 5 à 10,
**caractérisé en ce**
**que** l'agencement d'échange de mâchoires (70) comprend un magasin rotatif (86) sur le dispositif de maintien pour remplacer les premières mâchoires (66).

12. Dispositif d'enroulement ondulé (50) selon l'une quelconque des revendications 5 à 11, **caractérisé en ce**
**que** les premières et/ou secondes mâchoires (66, 68) comprennent des réceptacles de fil (87) pour positionner latéralement les fils guidés sensiblement parallèles (24).

13. Dispositif d'enroulement ondulé (50) selon la revendication 12, **caractérisé en ce**
**que** différentes premières et/ou secondes mâchoires (66, 68) sont pourvues de différentes distances entre leurs réceptacles de fil (87) et sont échangeables par l'agencement d'échange de mâchoires (70).

14. Dispositif d'enroulement ondulé (50) selon l'une quelconque des revendications 5 à 13,
**caractérisé en ce**
**que** plusieurs dispositifs de maintien (52, 54, 56) sont prévus, dont au moins un est mobile par rapport à au moins un autre et/ou au dispositif d'enroulement (60) dans une direction transversale à l'axe de rotation (58) et/ou dans une direction parallèle à l'axe de rotation (58), de préférence de manière entraînée, et/ou
en ce qu'au moins un dispositif de maintien fixe (52, 54, 56) et au moins un dispositif de maintien mobile (52, 54, 56) sont prévus et/ou en ce qu'une course de déplacement d'un dispositif de maintien mobile (52, 54, 56) est réglable.
